(19) Europäisches Patentamt
European Patent Office
Office européen des brevets

(11) **EP 2 828 133 B1**

(12) **EUROPÄISCHE PATENTSCHRIFT**

(45) Veröffentlichungstag und Bekanntmachung des Hinweises auf die Patenterteilung:
**20.02.2019 Patentblatt 2019/08**

(21) Anmeldenummer: **13711668.7**

(22) Anmeldetag: **20.03.2013**

(51) Int Cl.:
**B60T 13/52** *(2006.01)*  **B60T 17/22** *(2006.01)*
**G01L 1/14** *(2006.01)*  **B60Q 1/44** *(2006.01)*
**F15B 15/28** *(2006.01)*  **G01D 5/20** *(2006.01)*
**G01B 7/02** *(2006.01)*

(86) Internationale Anmeldenummer:
**PCT/EP2013/055853**

(87) Internationale Veröffentlichungsnummer:
**WO 2013/139867 (26.09.2013 Gazette 2013/39)**

(54) **BREMSGERÄT MIT EINER GERÄTEFEDER**

BRAKING DEVICE HAVING A DEVICE SPRING

DISPOSITIF DE FREINAGE COMPRENANT UN RESSORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2012 DE 102012204417**

(43) Veröffentlichungstag der Anmeldung:
**28.01.2015 Patentblatt 2015/05**

(73) Patentinhaber: **Continental Teves AG & Co. OHG 60488 Frankfurt am Main (DE)**

(72) Erfinder: **FALLER, Jürgen 63796 Kahl (DE)**

(56) Entgegenhaltungen:
**DE-A1- 10 351 933     DE-A1-102006 040 877**

EP 2 828 133 B1

## Beschreibung

Die Erfindung betrifft ein Bremsgerät mit Merkmalen nach dem Oberbegriff des unabhängigen Patentanspruch 1, insbesondere für eine Kraftfahrzeugbremsanlage.

## Stand der Technik:

Für Kraftfahrzeugbremsanlagen ist es wichtig und notwendig einen möglichst genauen Systemzustand - insbesondere eine für den Bremsdruckaufbau relevante Position von Betätigungskomponenten möglichst zu jedem beliebigen Zeitpunkt zu kennen. Bei den Kraftfahrzeugbremsanlagen mit einem pneumatischen Bremskraftverstärker kann beispielsweise eine momentane Position einer beweglichen und in ihrer Position und Bewegung an ein Betätigungselement gekoppelten Wand innerhalb des Bremskraftverstärkers als ein Maß für den Systemzustand herangezogen werden. Die gewonnene Information kann in Form von elektrischen Signalen an eine Steuereinheit, einen Bremslichtschalter oder eine weitere Aggregate weitergeleitet werden. Hierfür werden gesonderte Messvorrichtungen eingesetzt.

Beispielsweise ist aus der DE 103 51 933 A1 ein pneumatischer Bremskraftverstärker mit einer Sensorvorrichtung bekannt, welche einen scheibenförmigen Magneten als Geberelement und einen Hallsensor als Sensorelement umfasst, wobei das Geberelement gemeinsam mit der beweglichen Wand bewegt wird und zur Positionserfassung am Sensorelement vorbei geführt werden muss.

DE 10 2006 040 877 A1 offenbart einen Aktuator mit einer Schraubenfeder. Die Schraubenfeder ist elektrisch leitend. Die momentane Länge der Schraubenfeder wird über einen Stromfluss durch die Schraubenfeder ermittelt.

Ein komplexer Aufbau solcher Aggregate wird neben einem erhöhten Herstell-, Montage-, Abdichtungs- und Kalibrieraufwand unter Berücksichtigung der erforderlichen Messpräzision sowie Dauerhaltbarkeit generell als verbesserungswürdig angesehen. Zudem neigen derartige bekannte Messvorrichtungen dazu, bei einem größeren benötigten Messbereich einen erhöhten Raumbedarf zu beanspruchen und eine Gewichtszunahme zu verursachen.

## Aufgabe:

Es stellt sich daher die Aufgabe, ein verbessertes Bremsgerät anzubieten, welcher unter Vermeidung der vorstehend beschriebenen Nachteile kostengünstig eine präzise, zuverlässige und robuste Positions- und Bewegungsbestimmung eines Betätigungselements möglichst über den gesamten Bewegungsbereich des Betätigungselements ermöglicht.

## Lösung:

Erfindungsgemäß wird die Aufgabe mit den Merkmalen nach dem unabhängigen Patentanspruch 1 gelöst, indem der Gerätefeder zusätzlich eine Sensierfunktion zugeordnet ist, so dass die Gerätefeder ein Bestandteil der Vorrichtung zur Überwachung von Position und Bewegung wenigstens eines Betätigungselements ist, wobei ein Komprimierungsmaß der Gerätefeder erfassbar ist und dass die Gerätefeder elektrisch isoliert zwischen ihren Widerlagern angeordnet ist.

Dadurch wird es überraschend und auf eine effektive Weise unter Einsparung weiterer gesonderter Messvorrichtungen möglich, einer bereits vorhandenen und unverzichtbaren Komponente einen Mehrwert zu verleihen und die Positionsbestimmung auf Basis längenabhängiger Veränderung der Induktion der Gerätefeder vorzunehmen. Hierbei kann eine Positions- und Bewegungsmessung über den gesamten Hub beziehungsweise Komprimierungsbereich der Gerätefeder ohne einen vergrößerten Raumbedarf für gesonderte Sensorik und ohne Gewichtsnachteile realisiert werden. Eine einfache elektronische Kalibrierung auch nach jedem erfolgten Bremsvorgang kann ebenfalls unkompliziert ermöglicht werden.

In einer vorteilhaften Weiterbildung der Erfindung kann die Gerätefeder zumindest zeitweise elektrisch bestromt ausgeführt sein, wodurch auf eine besonders effektive Weise ein Komprimierungsgrad der Gerätefeder anhang ihrer Induktivitätsveränderung präzise erfassbar wird.

In einer vorteilhaften Ausführungsform der Erfindung kann eine Rückstellfeder eines pneumatischen Bremskraftverstärkers mit der zusätzlichen Sensierfunktion versehen werden. Dadurch kann überraschend ein bereits vorhandenes Konstruktionselement zusätzlich zu seiner Hauptfunktion zu einem Messzweck eingesetzt und durch eine derartige Funktionsintegration kann auf gesonderte Messelemente und Messvorrichtungen verzichtet werden.

In einer weiteren vorteilhaften Weiterbildung der Erfindung kann ferner zumindest die jeweils erste Windung an jedem Federende der Gerätefeder elektrisch isoliert ausgeführt sein beziehungsweise eine elektrische Isolierung aufweisen. Die elektrische Isolierung kann dabei beispielsweise als eine Lackschicht, eine Kunststoffbeschichtung, Wicklung, Ummantelung oder Isolierschlauch ausgeführt sein oder auch als ein gesonderter Kunststoffeinsatz, welcher steckbar, einrastbar oder rastbar oder urformbar gestaltet und an einem Federende oder zwischen einem Federende und einer Windung der Gerätefeder angeordnet werden. Damit kann man einfach und effektiv vermeiden, dass Messergebnisse durch eine unerwünschte elektrisch leitende Kontaktstelle zwischen einem Federende der Gerätefeder und beispielsweise eine Windung oder einem Verstärkergehäuse oder einem weiteren elektrisch leitfähigen Körber ungünstig beeinflusst werden.

Es versteht sich, das in Rahmen der Erfindung die Gerätefeder komplett und nicht nur zum Teil eine elektrische Isolierung aufweisen oder mit einer solchen umhüllt ausgeführt sein kann.

In einer weiteren vorteilhaften Weiterbildung der Erfindung können elektrische Leitungen mit Federenden der Gerätefeder elektrisch verbunden werden, wodurch eine einfache Kontaktierung ermöglicht und gleichzeitig die gesamte effektive Länge der Gerätefeder in einen elektrischen Kreis eingeschlossen und somit zur Messzwecken eingesetzt werden kann, wodurch wiederum eine höhere Messgenauigkeit und ein vergrößerter Messbereich erreichbar werden.

Eine vorteilhafte Ausführungsform der Erfindung sieht vor, dass wenigstens eine Verbindung eines Federendes der Gerätefeder mit einer elektrischen Leitung mittels eines Kupplungselements erfolgen kann, womit eine form-, kraft- oder form-kraftschlüssige Verbindung und ein vereinfachter Montagevorgang der Leitung an die Gerätefeder beispielsweise durch eine einfache Steck-, Klemm- oder Drehbewegung möglich wird. Jedoch kann innerhalb der Erfindung auch eine stoffschlüssige Verbindung beispielsweise durch Schweißen oder Löten eingesetzt werden.

Innerhalb einer weiteren vorteilhaften Ausführungsform der Erfindung kann das Kupplungselement elektrisch leitfähige Klemmmittel aufweisen, welche zudem zum Durchdringen einer elektrischen Isolierung des Federelements geeignet sind - beispielsweise ein Innengewinde, zacken-, klingen- oder dornförmige Innenvorsprünge. Derartige Klemmmittel können zudem derart ausgelegt sein, dass sie in den Werkstoff der Gerätefeder eindringen und dadurch einen zumindest teilweisen vibrationsresistenten verliersicheren Formschluss ermöglichen. Dadurch kann sowohl eine Montage der elektrischen Leitungen als auch die Herstellung der Gerätefeder erheblich vereinfacht werden, da die Anschlussstellen für die elektrische Leitungen nicht gesondert abisoliert ausgeführt oder irgendwie sonstig vorbereitet werden müssen.

In einer weiteren vorteilhaften Ausführungsform der Erfindung kann zwischen dem elastischen Element und dem Verstärkergehäuse wenigstens eine elektrisch isolierende Adapterplatte angeordnet werden. Dadurch können Messfehler aufgrund von störenden elektrischen Kontakten der Gerätefeder mit anderen elektrisch leitfähigen Körpern auf eine weinfache Weise vermieden werden.

Zudem kann die Adapterplatte in weiteren vorteilhaften Ausführungsbeispielen eine integrierte elektronische Auswerteeinheit aufweisen, womit die Länge von Anschlussleitungen und deren räumliche Führung erheblich vereinfacht werden. Es können zudem Fixiermittel zum Fixieren der Gerätefeder und/oder der elektrische Leitungen an der Adapterplatte vorgesehen werden. Hierdurch wird auf eine effektive Weise eine Verdrehsicherung geschaffen, eine Leitungsverlegung vereinfacht und den Leitungsbeschädigungen im Betrieb entgegengewirkt. Durch ein einfaches Einrasten oder Einfädeln der vorgenannten Leitungen oder der Gerätefeder kann vorteilhafterweise eine kompakte vorkonfektionierbare Baueinheit realisiert werden, womit ein Transport einzelner betroffener Komponenten sowie die Montage eines erfindungsgemäßen Bremsgeräts erheblich vereinfacht und Montagefehler vermieden werden können.

In einer weiteren vorteilhaften Ausführungsform der Erfindung können die Federenden der Gerätefeder tangential verlängert ausgeführt werden, so dass wenigstens ein Federende über das maximale Außendurchmesser der benachbarten Windung hinausragt. Ebenso können die Federenden radial nach außen, nach innen oder axial abgewinkelt und verlängert beziehungsweise gestreckt ausgeführt werden. Damit kann die Gerätefeder auf eine einfache Weise fixiert und/oder verdrehgesichert werden, indem mit den verlängerten Federenden zusammenwirkende form- oder kraftschlüssige Mittel - beispielsweise Ausschnitte, Rastösen oder Ähnliches, an den anliegenden Bauteilen - beispielsweise Adapterplatte oder Steuergehäuse, vorgesehen werden.

Vorzugsweise kann eine mechanisch trennbare elektrische Schnittstelle wie beispielsweise ein Stecker zur Übergabe von elektrischen Signalen zur und von der Gerätefeder vorgesehen sein, welche nach einer vorteilhaften Ausführungsform der Erfindung exponiert und einfach zugänglich an einem Verstärkergehäuse angeordnet werden kann.

In weiteren vorteilhaften Weiterbildungen und Ausführungsformen kann die elektrische Schnittstelle eine elektronische Auswerteeinheit, beispielsweise ein ASIC, zur Verarbeitung und Auswertung von den der Gerätefeder zugeordneten elektrischen Signalen umfassen und insbesondere integriert aufweisen. Damit kann eine günstige montage- sowie reparaturfreundliche Lösung realisiert werden.

In einer weiteren besonders vorteilhaften Ausführungsform kann die elektrische Schnittstelle einem Vakuumanschluss oder einem weiteren bereits zwingend vorhandenen Anschluss oder Konstruktionselement zugeordnet oder mit einem solchen integrativ ausgebildet sein. Damit kann die Anzahl von erforderlichen Durchbrüchen und Abdichtungen im Verstärkergehäuse sowie von Montageoperationen reduziert werden.

**Figurenbeschreibung:**

Weitere Einzelheiten, Merkmale, Vorteile und Anwendungsmöglichkeiten der Erfindung gehen aus Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:

Fig.1 eine Schnittdarstellung einer erfindungsgemäßen Ausführungsform des Bremsgeräts.

Fig.2 eine Teilinnenansicht einer weiteren erfindungsgemäßen Ausführungsform eines pneumatischen Bremskraftverstärkers.

Fig.3 eine erfindungsgemäße Ausführungsform einer Gerätefeder mit Adapterplatte und Steuergehäuse.

Fig.4 zwei erfindungsgemäße alternative Ausführungsformen (a,b) von Adapterplatten mit Gerätefeder.

Fig.5 zwei erfindungsgemäße alternative Ausführungsformen (a,b) einer elektrischen Schnittstelle mit und ohne Vakuumanschluss.

Fig.6 zwei erfindungsgemäße alternative Ausführungsformen einer Gerätefeder mit abgewinkelt (a) und tangential (b) verlängerten Federenden.

Fig.7 drei erfindungsgemäße alternative Ausführungsformen(a,b,c) einer elektrischen Verbindung zwischen einer Gerätefeder und einer elektrischen Leitung.

Fig.8 Teilansichten einer Gerätefeder ohne elektrische Isolierung (a) sowie zwei erfindungsgemäße alternative Ausführungsformen einer elektrischen Isolierung eines Federendes.

Weil ein grundsätzlicher Aufbau sowie Funktionsweise von wesentlichen Komponenten einer hydraulischen Bremsanlage wie beispielsweise eines pneumatischen Bremskraftverstärkers oder eines Hauptbremszylinders hinlänglich bekannt sind, wird nachfolgend auf deren vollständige genaue Erläuterung verzichtet, lediglich erfindungswesentliche Merkmale und Zusammenhänge werden hervorgehoben.

**Fig.1**

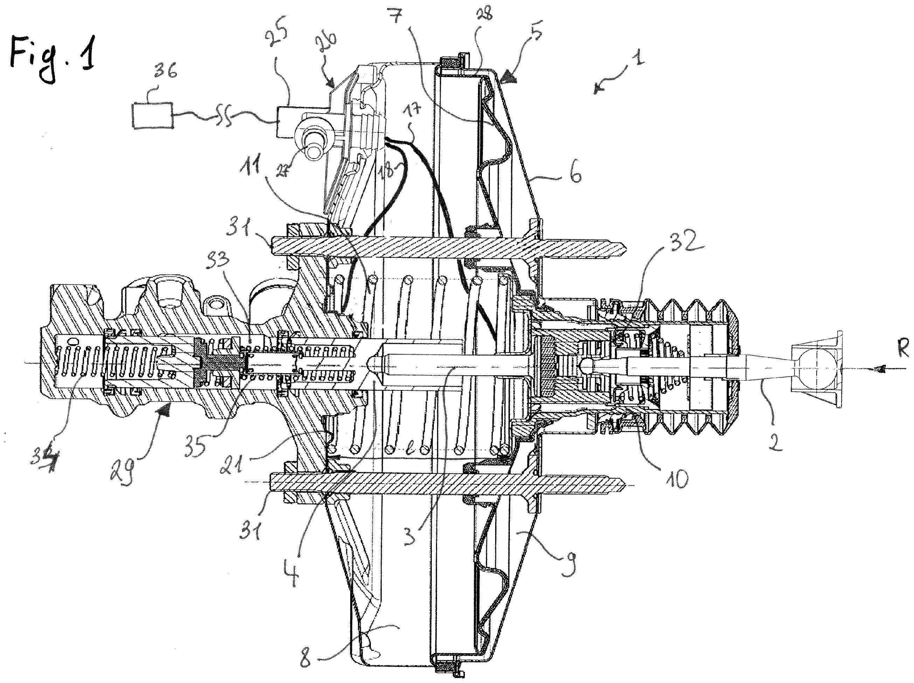

In der Fig.1 ist eine erste Ausführungsform eines erfindungsgemäßen Bremsgeräts 1 abgebildet. Das gezeigte Ausführungsbeispiel umfasst einen Hauptbremszylinder 29, welcher als ein Tandemhauptzylinder in sogenannter Plunger-Bauart ausgeführt ist und an einem pneumatischen Bremskraftverstärker 5 an den Zugankerbolzen 31 befestigt ist. Selbstverständlich sind auch weitere Ausführungsarten von Hauptbremszylindern, manuell oder fremdansteuerbaren pneumatischen, hydraulischen oder elektrohydraulischen Bremskraftverstärkern sowie Befestigungsarten innerhalb der Erfindung zulässig.

Der Bremskraftverstärker 5 umfasst ein vorzugsweise aus einer Metalllegierung hergestelltes Verstärkergehäuse 6 und darin eine mit einem pneumatischen Differenzdruck beaufschlagbare sowie entlang der Betätigungsrichtung (R) axial bewegliche Wand 7, welche unter Zuhilfenahme eines elastische Rollmembrans 28 das Verstärkergehäuse 6 in eine Unterdruckkammer 8 sowie eine Arbeitskammer 9 unterteilt. Die Wand 7 stützt sich an einem Steuergehäuse 10 ab und zieht diesen bei einer Bremsbetätigung in die Betätigungsrichtung R, komprimiert dabei eine Gerätefeder 11. Die Gerätefeder 11 ist aus einem elektrisch leitfähigen Metallwerkstoff, vorzugsweise Federstahl, als eine zylindrische beziehungsweise schraubenförmige stabförmig gestreckte Druckfeder ausgebildet, welche in dem gezeigten Ausführungsbeispiel zwischen zwei Widerlagern elastisch verspannt angeordnet ist, wovon das eine, ortsfeste Widerlager, durch das Verstärkergehäuse 6 und das andere, bewegliche Widerlager, durch das Steuergehäuse 10 gebildet sind. Zwischen dem Verstärkergehäuse 6 und der Gerätefeder 11 ist eine elektrisch isolierende Adapterplatte 21 zwischengeschaltet, so dass die Gerätefeder 11 von dem Verstärkergehäuse 6 elektrisch isoliert angeordnet wird. Die Gerätefeder 10 ist dabei als eine Rückholfeder ausgeführt, welche nach einer Beendigung eines Bremsvorganges und einem Druckausgleich in den beiden Kammern 8 und 9 das Steuergehäuse 10 in seine Ausgangs- beziehungsweise unbetätigte Lösestellung zurückschiebt. Dabei wird die Wand 7 von dem Steuergehäuse 10 mitgeschleppt. Somit erfüllt die Gerätefeder 10 eine für derartige Bremskraftverstärker unverzichtbare Funktion einer Rückstellfeder.

Weitere nicht gezeigte Bremskraftverstärker-Ausführungen wie beispielsweise ein pneumatischer Tandem-Bremskraftverstärker mit zwei beweglichen Wänden und jeweils zwei Arbeits- und Unterdruckkammern sind innerhalb der Erfindung ebenso realisierbar.

Eine Reihe von Betätigungselementen wie eine Kolbenstange 2, eine Druckstange 3 und ein Druckstangenkolben 4 werden in einem Bremsbetätigungsfall aus ihrer jeweiligen Ausgangslage beziehungsweise der unbetätigten Lösestellung bewegt und lösen dadurch jedes für sich eine bremswesentliche Aktion aus wie beispielsweise eine Aktivierung des Tellerventils 32 durch die Kolbenstange 2, eine Verschiebung des Druckstangenkolbens 4 durch die Druckstange 3 oder ein hydraulischer Druckaufbau in der Druckkammer 33 durch den Druckstangenkolben 4. Möglichst präzise Kenntnisse über eine genaue momentane Position sowie Bewegungszustand eines Betätigungselements sind eminent wichtig für die Beurteilung eines System- beziehungsweise Betriebszustandes einer hydraulischen Kraftfahrzeugbremsanlage. Weil insbesondere die Druckstange 3 und der Druckstangenkolben 4 in ihrer Bremsbetätigungsbewegungen aneinander gekoppelt sind, kann es ausreichend sein, lediglich eines der Betätigungselemente zu überwachen, obschon eine redundante Überwachung von mehreren Betätigungselementen 2,3,4 vorteilhaft sein kann, weil dadurch eine höhere Messgenauigkeit und eine sicherere Beurteilung des Betriebszustandes möglich sind.

Eine in der abgebildeten Ausführungsform der Erfindung eingesetzte Rückstellfeder beziehungsweise die Gerätefeder 11 entspricht in ihrer elektromagnetischen Eigenschaften jedoch weitgehend einer elektromagnetischen Zylinderspule. Eine elektromagnetische Zylinderspule hat eine physikalische Eigenschaft, wonach ihre Induktivität L abhängig von ihrer Länge l ist. Beispielsweise gilt in grober Annäherung die Formel:

$$L \approx \frac{\mu_0 N^2 A}{l}.$$

Hierbei steht **A** für eine radiale Querschnittsfläche der Zylinderspule beziehungsweise einer Schraubfeder, **N** für die Windungszahl und $\mu$**0** für die Permeabilität des Vakuums.

Im Umkehrschluss bedeutet dies, dass durch Erfassung und/oder Berechnungen der Induktivität L der Gerätefeder 11 in wenigstens 2 unterschiedlichen Komprimierungs- beziehungsweise Hubzuständen der Gerätefeder 11 ein Komprimierungsmaß beziehungsweise ein Hub der Gerätefeder 11 und somit eine Position wenigstens eines der mit der Bewegung der Gerätefeder 11 zumindest teilweise gekoppelten Betätigungselemente 2,3,4 bestimmt werden können. Bei einer permanenten Überwachung der Induktion L beziehungsweise ihrer Veränderung können auch komplexe Informationen über einen Bewegungsablauf der vorgenannten Betätigungselemente gewonnen werden. Die Gerätefeder 11 erfüllt somit neben ihrer primären Eigenschaft eine Mehrwertfunktion als ein Bestandteil einer Vorrichtung zur Überwachung von Position und Bewegung wenigstens eines Betätigungselements 2,3,4.

Die Induktivität L kann beispielsweise mit einem Schwingkreisverfahren bestimmt werden, wobei aus dem Verhalten des Schwingkreises die Induktivität L bestimmt werden kann. Die Gerätefeder stellt dann ein Teil eines elektromagnetischen Schwingkreises dar und übernimmt darin die Funktion einer elektromagnetischen Spule.

Um die Induktivität L anhand eines Schwingkreisverfahrens überwachen zu können, werden elektrische Leitungen 17,18 einerseits mit den hier nicht gezeigten Federenden 15,16, andererseits mit einer hier nicht abgebildeten elektronischen Auswerteeinheit 22 und/oder einer elektrischen Schnittstelle 25 verbunden. Über die elektrische Leitungen 17,18 kann beispielsweise elektrischer Strom zu der Gerätefeder zugefügt, eine elektrische Spannung angelegt und elektrische Signale abgegriffen werden. Die elektrischen Schnittstelle 25 ist mit einer weiteren elektronischen Steuereinheit 36 über weitere elektrische Leitungen verbunden.

Eine erforderliche elektronische Auswertung der gewonnenen Signale und/oder Steuerung der erforderlichen Bestromung der Gerätefeder 11 kann in einer in weiteren Figurenbeschreibungen offenbarten Auswerteeinheit 22 oder in einer weiteren elektronischen Steuereinheit 36, beispielsweise einer ECU, erfolgen.

Neben der vorstehend beschriebenen mechanischen Kontaktierung der Gerätefeder 11 kann bei weiteren eingesetzten Messverfahren auch eine berührungslose Kontaktierung der Gerätefeder verwendet werden.

Statt der abgebildeten zylindrischen Gestaltung kann die Gerätefeder in weiteren Ausführungen innerhalb der Erfindung selbstverständlich auch anders gestaltet sein, beispielsweise mit unterschiedlichen Außendurchmessern im Federkörper und/oder an den Federenden, wie konisch, konvex, konkav, abgestuft, in besonderen Ausführungsformen auch als eine Zug- statt einer Druckfeder oder auch nicht rund in ihrem radialen Querschnitt. Ebenso sind Elastomerfedern mit integrierter oder aufgesetzter elektrisch leitender Wicklung vorstellbar. Hierbei erfüllt die Wicklung die Funktion des Sensierelements, während die Elastomerfeder eine Aufgabe der Rückstellfeder übernimmt.

Ferner muss eine Übertragung einer Sensierfunktion nicht ausschließlich auf die in der Fig.1 abgebildete Gerätefeder 11 beschränkt sein, sondern auch einer oder mehreren anderen Gerätefedern, beispielsweise dem oder den Federelementen 34,35 oder einem weiteren, nicht abgebildeten, beispielsweise in dem Verstärkergehäuse 6 radial nach außen versetzten Federelement exklusiv, oder zusätzlich redundant zur Gerätefeder 11 zugewiesen werden.

**Fig.2**

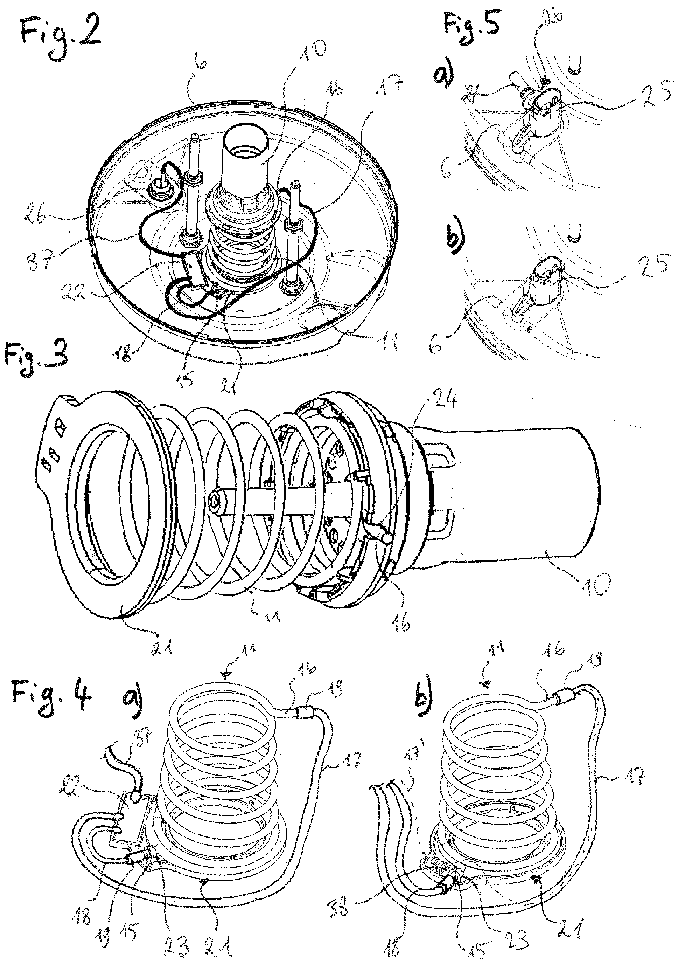

In der Fig.2 ist eine Teilinnenansicht eines erfindungsgemäßen pneumatischen Bremskraftverstärkers dargestellt. Zu erkennen seien eine aus einer elektrisch leitfähigen Metalllegierung hergestellte vordere Hälfte des Verstärkergehäuses 6 und eine unter Zwischenschaltung einer elektrisch isolierenden Adapterplatte 21 sich an dem Verstärkergehäuse 6 abstützende konische Gerätefeder 11. Das Verstärkergehäuse 6 bildet ein erstes relativ ortsfestes Widerlager für die Gerätefeder 11, wogegen ein zweites bewegbares Widerlager durch das Steuergehäuse 10 gebildet ist. Das Steuergehäuse 10 ist vorzugsweise aus einem elektrisch isolierenden Kunststoffwerkstoff ausgebildet. Damit ist die Gerätefeder 11 elektrisch isoliert zwischen zwei Widerlagern eingespannt. Es ist jedoch innerhalb der Erfindung ebenso zulässig, das zweite Widerlager ebenfalls aus einem elektrisch leitfähigen Werkstoff zu gestalten und dafür eine weitere elektrisch isolierende Adapterplatte der Gerätefeder vorzuschalten.

Eine elektronische Auswerteeinheit 22 ist in der Adapterplatte 21 integriert vorgesehen. Zwei elektrische Leitungen 17,18 verbinden die jeweiligen Federenden 16,15 mit der Auswerteeinheit 22. Eine weitere elektrische Verbindungsleitung 37 verbindet die Auswerteeinheit 22 mit einer nicht gezeigten elektrischen Schnittstelle 25, welche einem Vakuumanschluss 26 zugeordnet ist.

## Fig.3

Eine in der Fig.3 gezeigte erfindungsgemäße Ausführungsform des Steuergehäuses 10 verfügt an seiner radialen Außenseite über einen Ausschnitt, in welchen das Federende 16 der Gerätefeder 11 eingreift, so dass ein Formschluss 24 gebildet ist. Der Formschluss verhindert eine Verdrehung der Gerätefeder 11 relativ zum bereits funktionsbedingt verdrehgesichert geführten Steuergehäuse 10, vereinfacht damit beispielsweise eine Leitungsverlegung der nicht gezeigten Leitungen 17,18 und verhindert deren Beschädigung beim Betrieb des Bremsgeräts 1.

## Fig.4

In der Fig.4 sind zwei verschiedene erfindungsgemäße Ausführungsbeispiele der Adapterplatte 21 dargestellt. In der Ansicht a umfasst die Adapterplatte 21 eine darin integrierte elektronische Auswerteeinheit 22 sowie ein Fixiermittel 23, welcher zum einrastbaren Fixieren des Federendes 15 vorgesehen ist. Neben einer verdrehsichernden Funktion für die Gerätefeder 11 ermöglicht das Fixiermittel 23 eine verliergesicherte Anbindung der Adapterplatte 21 an der Gerätefeder. Dadurch kann beispielsweise eine vorkonfektionierbare Baugruppe, umfassend die Gerätefeder, die Adapterplatte 21 mit der Auswerteeinheit 22 sowie Leitungen 17,18 realisiert werden, welche separat gehandhabt, beispielsweise transportiert oder in den Bremsverstärker 5 montiert werden kann.

Von der Auswerteeinheit 22 führt eine elektrische Verbindungsleitung 37 zu einer nicht gezeigten elektrischen Schnittstelle oder einer weiteren nicht gezeigten Auswerteeinheit.

Die Adapterplatte in der Ansicht b verfügt nicht über keine integrierte Auswerteeinheit, stattdessen weist sie zwei weitere Fixiermittel - die Leitungshalterungen 38, welche beispielsweise zum einklemmen der Leitung 17 geeignet sind, so dass einerseits eine Zugentlastung und andererseits ein definierter Verlauf beziehungsweise Leitungsverlauf 17' für die elektrische Leitung ermöglicht werden. Selbstverständlich sind sowohl eine Fixierung weiterer Leitungen als auch abweichende Ausgestaltungen für das Fixiermittel 38 innerhalb der Erfindung zulässig, beispielsweise in Form eines Ω-Klipps.

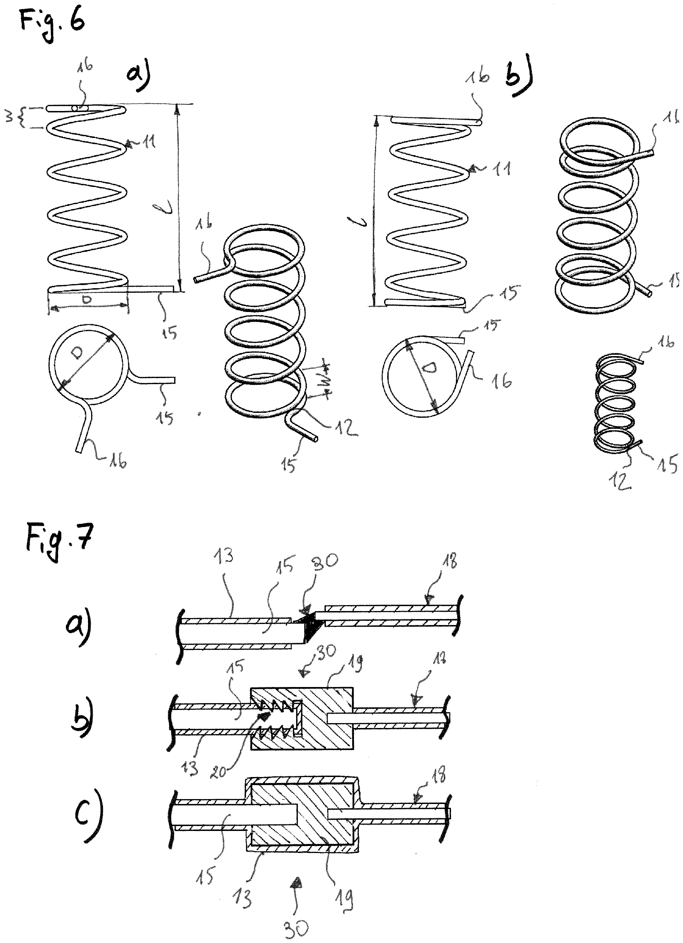

In den gezeigten Ausführungsbeispielen sind die Leitungen 17,18 mittels Kupplungselemente 19 mit den Federenden 15,16 verbunden, obwohl innerhalb der Erfindung auch weiter Verbindungsmöglichkeiten zulässig sind, beispielsweise wie in der Fig.7 gezeigt.

## Fig.5

In der Fig.5 sind zwei erfindungsgemäße Ausführungsbeispiele einer elektrischen Schnittstelle 25 abgebildet. Die elektrische Schnittstelle ist im Allgemeinen als ein mechanisch trennbarer Stecker gestaltet und kann je nach Kundenwunsch verschiedene geometrische Formen aufweisen. In den gezeigten Ausführungsformen ist die Schnittstelle 25 an einem Verstärkergehäuse 6 angeordnet, jedoch sind auch weitere Positionen innerhalb der Erfindung zulässig. Ebenso ist es innerhalb der Erfindung vorstellbar, dass eine nicht gezeigte elektronische Auswerteeinheit in die elektrische Schnittstelle 25 integriert sein kann.

Ferner kann die Schnittstelle 25 eine Verdrehsicherung aufweisen, welche beispielsweise wie abgebildet als ein Tragarm mit einem daran angeordneten zylindrischen Vorsprung ausgebildet ist, wobei der Vorsprung mit einer Verprägung im Zylindergehäuse 6 zusammenwirkt.

In der Ausführung a ist die Schnittstelle 25 einem Vakuumanschluss 26 integrativ zugeordnet und verfügt über einen abgewinkelt ausgeführten Stutzen 27. Hiermit wird einem meistens regelmäßig vorhandenen Vakuumanschluss eine Mehrwertfunktion zugewiesen. Darüber hinaus kann mit einem einzelnen gemeinsamen abzudichtenden Durchbruch in Verstärkergehäuse 6 sowohl eine Luftevakuierung aus einer Unterdruckkammer 8 als auch ein Durchschleusen von elektrischen Anschlüssen beispielsweise für die Leitungen 17,18 oder 37 realisiert werden.

In der Ansicht b ist die Schnittstelle 25 dagegen solitär ausgeführt und verfügt über einen eigenen Durchbruch im Verstärkergehäuse 6.

## Fig.6

In der Fig.6 sind zwei verschieden Ausführungsbeispiele einer Gerätefeder 11 dargestellt. In beiden Fällen ist die Gerätefeder 11 als eine stabförmige Schraubfeder mit einer Federlänge l und einem Außendurchmesser D gestaltet und verfügt über zwei gestreckte beziehungsweise verlängerte Federenden 15 und 16.

Die verlängerten Federenden 15,16 und ragen dabei radial über einen Außendurchmesser (D) einer dem jeweiligen Federende 15,16 nächsten benachbarten Windung W der Gerätefeder 11 hinaus.

Die Ausführung nah der Ansicht a weist radial nach außen abgewinkelte Federenden 15 und 16. Selbstverständlich sind auch weitere Ausgestaltungen möglich - so können die Federenden auch beispielsweise radial nach innen und/oder auch axial abgewinkelt sein. Im Unterschied zur Ausführung nach Ansicht a sind die Federenden in der Ansicht b tangential verlängert ausgeführt.

Ebenso können lediglich eines oder beide Federenden 15,16 bei Bedarf anliegend ausgeführt sein, so dass innerhalb der jeweils ersten Windung W beziehungsweise einer Endwindung eine Kontaktstelle 12 gebildet wird. Generell ist es jedoch innerhalb der Erfindung zulässig, die Federenden 15,16 sowohl angelegt als auch offen auskaufend oder angelegt und geschliffen zu gestalten.

Innerhalb der Erfindung sind auch weitere Ausführungsformen möglich, beispielsweise kann lediglich eines der Federenden verlängert ausgeführt sein oder die Ausführungsart der Streckung von Federenden 15,16 an einer einzelnen Gerätefeder 11 kann beliebig kombiniert werden.

**Fig.7**

Die Fig.7 zeigt schematisch vereinfacht drei unterschiedliche Ausführungsformen einer elektrischen Kontaktierung im Sinne einer elektrisch leitenden Verbindung zwischen einem Federende und einer elektrischen Leitung.

Die Ansicht a zeigt eine stoffschlüssige Verbindung 30 zwischen einem mit einer elektrischen Isolierung 13 versehenen Federende 15 und einer ebenfalls isolierten elektrischen Leitung 18. Die stoffschlüssige Verbindung 30 kann je nach Werkstoffwahl beispielsweise durch Schweißen oder Löten erfolgen.

In der Ausführung nach Ansicht b ist die elektrische Verbindung 30 kraft oder formschlüssig mittels eines elektrisch leitenden Kupplungselements 19 ausgeführt. Das Kupplungselement 19 ist auf einer Seite mit der Leitung 18 verbunden und weist auf der anderen Seite eine Öffnung mit den darin angeordneten Klemmmittel 20, welche einerseits einen elektrisch leitenden Kontakt zwischen dem Kupplungselement und dem Werkstoff der Gerätefeder 11 zustande bringen und dabei bereits bei der Montage auf dem Federende 15 eine daran angebrachte Isolierung 13 durchdringen, andererseits als eine Verlustsicherung fungieren und das Kupplungsstück 19 formschlüssig oder kraft-formschlüssig auf dem Federende 15 sicher festhalten. Die Klemmmittel können beispielsweise wie abgebildet als scharfe zackenförmige Innenvorsprünge, umlaufende Rillen, Dorne, eine das Kupplungsstück durchgreifende Klemmschraube oder auch als ein Innengewinde ausgebildet sein. Je nach Ausführungsart wird das Kupplungselement 19 dabei entweder durch eine Steckbewegung, eine Drehbewegung oder eine Kombination der beiden Bewegungen auf dem Federende 15 montiert.

Durch das Einführen des Federendes 15 in das Kupplungsstück 19 wird eine Schicht der elektrischen Isolierung 13 durch die Klemmmittel 20 zerstört beziehungsweise durchdrungen und das Federende 15 wird in dem Kupplungselement 19 durch die Klemmmittel 20 kraftschlüssig eingeklemmt. Werden die Klemmmittel 20 härter als das Werkstoff der Gerätefeder 11 ausgeführt, kann durch das Eindringen der Spitzen der Klemmmittel 20 in das Federende 15 ein Formschluss mit dem Federende 15 erzeugt werden.

In der Ausführungsform nach Ansicht c wird ein Federende 15, welches im Unterschied zur Ausführung nach Ansicht b zumindest teilweise abisoliert beziehungsweise frei von der elektrischen Isolierung 13 ausgeführt ist, in einem Kupplungselement 19 mechanisch verpresst oder mit einem Werkstoff des Kupplungselements 19 umgossen. Anschließend wird der gesamte Bereich der Verbindung 30 mit einer elektrischen Isolierung 13 umhüllt.

Es versteht sich, dass die gezeigten Ausführungsbeispiele genauso für das Federende 16 und die Leitung 17 gelten

**Fig.8**

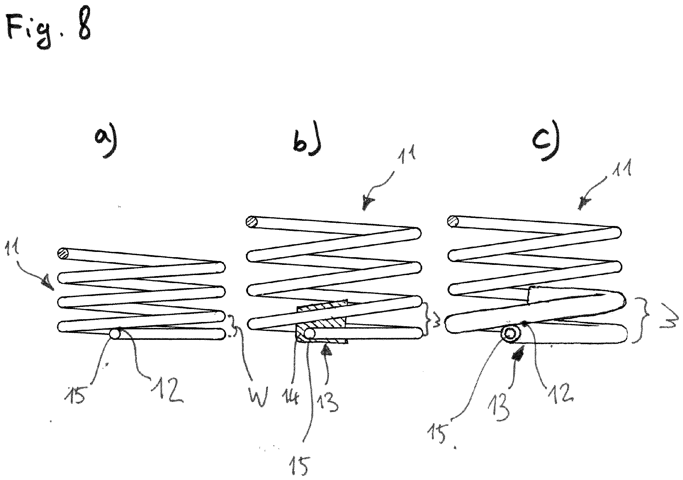

In der Fig.8 ist beispielhaft und schematisch ein Ausschnitt einer Gerätefeder 11 abgebildet. Der Ansicht a ist zu entnehmen, dass beim Komprimieren der Gerätefeder 11 das Federende 15 zum Anliegen am restlichen Federkörper kommt, so dass eine Kontaktstelle 12 entsteht. Verfügt der Bereich der Kontaktstelle 12 über keine elektrische Isolierung, kann es zu Störungen bei einer Überwachung der Induktivität L kommen, das Ergebnis wird verfälscht. Für korrekte Messungen muss eine elektrische Verbindung an einer potentiellen Kontaktstelle vermieden werden. Dies kann beispielsweise durch Aufbringen einer elektrischen Isolierung 13 erreicht werden.

In der Ansicht b ist eine elektrische Isolierung 13 durch einen Kunststoffeinsatz 14 gebildet, welcher im Bereich einer potentiellen Kontaktstelle eingegossen ist. Ebenso kann ein derartiger Kunststoffeinsatz 14 an dem Federende 15 oder weiter innerhalb der Windung W gesteckt, eingerastet, geklebt oder angegossen sein.

Die Ausführungsform in der Ansicht c weist eine elektrische Isolierung 13 auf, welche die erste Windung W der Gerätefeder 11 vollständig abschirmt beziehungsweise umhüllt. Eine derartige Isolierung kann beispielsweise durch eine gesonderte Lackierung, eine Kunststoffbeschichtung oder einen Isolierschlauch realisiert werden.

Innerhalb der Erfindung ist es ebenfalls möglich, nicht nur einzelne Windungen, sondern die gesamte Gerätefeder vollständig mit einer elektrischen Isolierung 13 zu umhüllen. Dies bietet den Vorteil, dass die Gefahr eines unerwünschten Kontaktes der Gerätefeder 11 mit einem weiteren elektrisch leitfähigen Körper an jeder beliebigen Stelle der Gerätefeder vermieden werden kann.

**Bezugszeichen:**

| | |
|---|---|
| 1 | Bremsgerät |
| 2 | Betätigungselement Kolbenstange |
| 3 | Betätigungselement Druckstange |
| 4 | Betätigungselement Druckstangenkolben |
| 5 | Bremskraftverstärker |
| 6 | Verstärkergehäuse |
| 7 | Axial bewegliche Wand |
| 8 | Unterdruckkammer |
| 9 | Arbeitskammer |
| 10 | Steuergehäuse |
| 11 | Gerätefeder |
| 12 | Kontaktstelle |

13 Elektrische Isolierung
14 Kunststoffeinsatz
15 Federende
16 Federende
17 Elektrische Leitung
17' Alternativer Leitungsverlauf der Leitung 17
18 Elektrische Leitung
19 Kupplungselement
20 Klemmmittel zum Durchdringen der elektrischen Isoliersung
21 Adapterplatte
22 Elektronische Auswerteeinheit
23 Fixiermittel
24 Formschluss am Steuergehäuse
25 Elektrische Schnittstelle
26 Vakuumanschluss
27 Stutzen
28 Rollmembran
29 Hauptbremszylinder
30 Elektrisch leitfähige Verbindung
31 Zugankerbolzen
32 Tellerventil
33 Druckkammer
34 Federelement
35 Federelement
36 Elektronische Steuereinheit
37 Verbindungsleitung
38 Leitungshalter
R Betätigungsrichtung
W Windung
D Außendurchmesser einer Windung
L Induktivität
l Länge

**Patentansprüche**

1. Bremsgerät (1), insbesondere für eine Kraftfahrzeugbremsanlage, wobei das Bremsgerät (1) wenigstens ein bewegbares Betätigungselement (2,3,4) sowie wenigstens eine Vorrichtung zur Überwachung von Position und Bewegung wenigstens eines Betätigungselements (2,3,4) aufweist und wenigstens eine komprimierbare elektrisch leitfähige Gerätefeder (11) umfasst, welche zwischen zwei Widerlagern elastisch vorgespannt angeordnet ist, wobei wenigstens eines der Widerlager bewegbar ausgeführt ist und die Bewegung des Widerlagers zumindest teilweise an eine Bewegung wenigstens eines Betätigungselements (2,3,4) gekoppelt ist und wobei die Gerätefeder (11) dazu vorgesehen ist, wenigstens eines der Widerlager in seine unbetätigte Lösestellung zu bewegen, wobei das Bremsgerät (1) einen pneumatischen Bremskraftverstärker (5) mit einem Verstärkergehäuse (6) aufweist, welches durch mindestens eine, mit einem pneumatischen Differenzdruck beaufschlagbare und entlang einer Betätigungsrichtung (R) axial bewegliche Wand (7) in mindestens eine Unterdruckkammer (8) und mindestens eine Arbeitskammer (9) unterteilt ist, wobei die Wand (7) sich an einem Steuergehäuse (10) abstützt oder daran befestigt ist und wobei eine Bewegung der Wand (7) an eine Bewegung wenigstens eines Betätigungselements (2,3,4) wenigstens zeitweise gekoppelt ist und wobei die Gerätefeder zwischen dem Verstärkergehäuse (6) und dem Steuergehäuse (10) verspannt angeordnet ist, **dadurch gekennzeichnet, dass** die Gerätefeder (11) als eine Rückstellfeder zum Rückstellen des Steuergehäuses (10) nach einem Bremsvorgang in Richtung seiner unbetätigten Ausgangsposition ausgebildet ist, wobei der Gerätefeder (11) zusätzlich eine Sensierfunktion zugeordnet ist, indem die Gerätefeder (11) ein Bestandteil der Vorrichtung zur Überwachung von Position und Bewegung wenigstens eines Betätigungselements (2,3,4) ist, wobei ein Komprimierungsmaß der Gerätefeder (11) erfassbar ist und dass die Gerätefeder (11) elektrisch isoliert zwischen den beiden Widerlagern angeordnet ist.

2. Bremsgerät (1) nach Anspruch 1 **dadurch gekennzeichnet, dass** die Gerätefeder (11) zumindest zeitweise elektrisch bestromt ausgeführt ist.

3. Bremsgerät (1) nach Anspruch 1 **dadurch gekennzeichnet, dass** die Gerätefeder (11) als eine Schraubendruckfeder mit wenigstens einer Windung (W) ausgebildet ist.

4. Bremsgerät (1) nach Anspruch 3 **dadurch gekennzeichnet, dass** die Gerätefeder (11) beim Komprimieren innerhalb wenigstens einer Windung (W) wenigstens eine Kontaktstelle (12) aufweist wobei die Kontaktstelle (12) über eine elektrische Isolierung (13) verfügt.

5. Bremsgerät (1) nach Anspruch 3 **dadurch gekennzeichnet, dass** wenigstens eine erste Windung (W) der Gerätefeder (11) eine elektrische Isolierung (13) aufweist.

6. Bremsgerät (1) nach Ansprüchen 4 oder 5 **dadurch gekennzeichnet, dass** die elektrische Isolierung (13) als eine Kunststoffummantelung ausgeführt ist.

7. Bremsgerät (1) nach Ansprüchen 4 oder 5 **dadurch gekennzeichnet, dass** die elektrische Isolierung (13) als eine Lackbeschichtung ausgeführt ist.

8. Bremsgerät (1) nach Ansprüchen 4 oder 5 **dadurch gekennzeichnet, dass** die elektrische Isolierung als ein Kunststoffeinsatz (14) ausgeführt ist.

9. Bremsgerät (1) nach Anspruch 1 **dadurch gekennzeichnet, dass** die Gerätefeder (11) über wenigstens 2 Federenden (15,16) verfügt und das Bremsgerät (1) wenigstens 2 elektrische Leitungen (17,18) aufweist, wobei wenigstens eine Leitung (17) mit einem Federende (16) und wenigstens eine weitere Leitung (18) mit wenigstens einem anderen Federende (15) eine elektrisch leitfähige Verbindung (30) aufweist.

10. Bremsgerät (1) nach Anspruch 9 **dadurch gekennzeichnet, dass** wenigstens eine elektrisch leitfähige Verbindung (30) ein Kupplungselement (19) zum Verbinden der Leitung (16,17) mit der Gerätefeder (11) aufweist.

11. Bremsgerät (1) nach wenigstens einem der Ansprüche 4 bis 8 und 10 **dadurch gekennzeichnet, dass** das Kupplungselement (19) elektrisch leitfähige Klemmmittel (20) zum Durchdringen der elektrischen Isoliersung (13) aufweist.

12. Bremsgerät (1) nach Anspruch 1 **dadurch gekennzeichnet, dass** zwischen der Gerätefeder (11) und dem Verstärkergehäuse (6) wenigstens eine elektrisch isolierende Adapterplatte (21) angeordnet ist.

13. Bremsgerät (1) nach Anspruch 12 **dadurch gekennzeichnet, dass** eine elektronische Auswerteeinheit (22) an der Adapterplatte (21) angeordnet ist.

14. Bremsgerät (1) nach Ansprüchen 1 und 9 **dadurch gekennzeichnet, dass** wenigstens ein Federende (15,16) der Gerätefeder (11) tangential verlängert ausgeführt ist.

15. Bremsgerät (1) nach Ansprüchen 3 und 9 **dadurch gekennzeichnet, dass** wenigstens ein Federende (15,16) der Gerätefeder (11) abgewinkelt ausgeführt ist.

16. Bremsgerät (1) nach Anspruch 12 **dadurch gekennzeichnet, dass** die Adapterplatte (21) über wenigstens ein Fixiermittel (23,38) zum Fixieren der Gerätefeder (11) verfügt.

17. Bremsgerät (1) nach Anspruch 9 **dadurch gekennzeichnet, dass** das Steuergehäuse 10 wenigstens einen Formschluss (24) mit einem Federende (16) der Gerätefeder (11) aufweist.

18. Bremsgerät (1) nach Anspruch 1 **dadurch gekennzeichnet, dass** der Bremskraftverstärker (5) eine mechanisch trennbare elektrische Schnittstelle (25) zur Übergabe von elektrischen Signalen zum und von der Gerätefeder (11) aufweist.

19. Bremsgerät (1) nach Anspruch 18 **dadurch gekennzeichnet, dass** die elektrische Schnittstelle (25) eine elektrische Auswerteeinheit (22) umfasst.

20. Bremsgerät (1) nach Anspruch 18 **dadurch gekennzeichnet, dass** die elektrische Schnittstelle (25) an dem Verstärkergehäuse (6) angeordnet ist.

21. Bremsgerät (1) nach Anspruch 18 **dadurch gekennzeichnet, dass** die elektrische Schnittstelle (25) einem Vakuumanschluss (26) zugeordnet oder in diesen integriert ist.

**Claims**

1. Braking device (1), particularly for a motor vehicle brake system, wherein the braking device (1) has at least one moveable actuating element (2, 3, 4) and at least one device for monitoring the position and movement of at least one actuating element (2, 3, 4), and comprises at least one compressible electrically conductive device spring (11), which is arranged elastically pre-tensioned between two abutments, wherein at least one of the abutments is of moveable design and the movement of the abutment is at least partially coupled to a movement of at least one actuating element (2, 3, 4), and wherein the device spring (11) is intended to move at least one of the abutments into its unactuated, release position, wherein the braking device (1) has a pneumatic brake booster (5) having a brake booster housing (6), which is divided by at least one wall (7), which can be acted upon by a pneumatic pressure differential and is axially moveable in an actuating direction (R), into at least one vacuum chamber (8) and at least one working chamber (9), wherein the wall (7) is supported on a control housing (10) or fixed thereto and wherein a movement of the wall (7) is at least intermittently coupled to a movement of at least one actuating element (2, 3, 4) and wherein the device spring is arranged braced between the brake booster housing (6) and the control housing (10) **characterized in that** the device spring (11) is embodied as a return spring for returning the control housing (10) in the direction of its unactuated, initial position following a braking sequence, wherein the device spring (11) is additionally assigned a sensing function, **in that** the device spring (11) is an integral part of the device for monitoring the position and movement of at least one actuating element (2, 3, 4), wherein a degree of compression of the device spring (11) can be registered, and that the device spring (11) is arranged, electrically insulated, between the two abutments.

2. Braking device (1) according to Claim 1, **characterized in that** the device spring (11) is designed to carry an electrical current at least intermittently.

3. Braking device (1) according to Claim 1, **characterized in that** the device spring (11) is embodied as a helical compression spring having at least one coil (W).

4. Braking device (1) according to Claim 3, **characterized in that** the device spring (11), on compression within at least one coil (W), has at least one contact point (12), wherein the contact point (12) has an electrical insulation (13)

5. Braking device (1) according to Claim 3, **characterized in that** at least a first coil (W) of the device spring (11) has an electrical insulation (13).

6. Braking device (1) according to Claims 4 or 5, **characterized in that** the electrical insulation (13) is embodied as a plastic sheathing.

7. Braking device (1) according to Claims 4 or 5, **characterized in that** the electrical insulation (13) is embodied as a paint coating.

8. Braking device (1) according to Claims 4 or 5, **characterized in that** the electrical insulation is embodied as a plastic insert (14).

9. Braking device (1) according to Claim 1, **characterized in that** the device spring (11) has at least two spring ends (15, 16) and the braking device (1) comprises at least two electrical leads (17, 18), wherein at least one lead (17) has an electrically conductive connection (30) to one spring end (16), and at least one further lead (18) has an electrically conductive connection (30) to at least one other spring end (15).

10. Braking device (1) according to Claim 9, **characterized in that** an electrically conductive connection (30) comprises a coupling element (19) for connecting the lead (16, 17) to the device spring (11).

11. Braking device (1) according to at least one of Claims 4 to 8 and 10, **characterized in that** the coupling element (19) comprises electrically conductive clamping means (20) for penetrating the electrical insulation (13).

12. Braking device (1) according to Claim 1, **characterized in that** at least one electrically insulating adapter plate (21) is arranged between the device spring (11) and the brake booster housing (6).

13. Braking device (1) according to Claim 12, **characterized in that** an electronic evaluation unit (22) is arranged on the adapter plate (21).

14. Braking device (1) according to Claims 1 and 9, **characterized in that** at least one spring end (15, 16) of the device spring (11) is extended tangentially.

15. Braking device (1) according to Claims 3 and 9, **characterized in that** at least one spring end (15, 16) of the device spring (11) is of bent design.

16. Braking device (1) according to Claim 12, **characterized in that** the adapter plate (21) has at least one fixing device (23, 38) for fixing the device spring (11).

17. Braking device (1) according to Claim 9, **characterized in that** the control housing (10) has at least one positive interlock (24) with a spring end (16) of the device spring (11).

18. Braking device (1) according to Claim 1, **characterized in that** the brake booster (5) has a mechanically separable electrical interface (25) for relaying electrical signals to and from the device spring (11).

19. Braking device (1) according to Claim 18, **characterized in that** the electrical interface (25) comprises an electrical evaluation unit (22).

20. Braking device (1) according to Claim 18, **characterized in that** the electrical interface (25) is arranged on the brake booster housing (6).

21. Braking device (1) according to Claim 18, **characterized in that** the electrical interface (25) is assigned to a vacuum connection (26) or is integrated into the latter.

**Revendications**

1. Appareil de freinage (1), en particulier pour une installation de freinage d'un véhicule automobile, l'appareil de freinage (1) présentant au moins un élément d'actionnement mobile (2, 3, 4) ainsi qu'au moins un dispositif de contrôle de la position et du déplacement d'au moins un élément d'actionnement (2, 3, 4) et comprenant au moins un ressort d'appareil (11) comprimable, électriquement conducteur, qui est disposé de manière précontrainte élastiquement entre deux butées, au moins l'une des butées étant réalisée de manière déplaçable et le déplacement de la butée étant accouplé au moins en partie à un déplacement d'au moins un élément d'actionnement (2, 3, 4) et le ressort d'appareil (11) étant prévu pour déplacer au moins l'une des butées dans sa position de libération non actionnée, l'appareil de freinage (1) présentant un servofrein pneumatique (5) avec un boîtier de servofrein (6) qui est divisé, par au moins une paroi (7) pouvant être sollicitée avec une pression différentielle pneumatique et pouvant être déplacée axialement le long d'une direction d'actionnement (R), en au moins une chambre à dépression (8) et au moins une chambre de travail (9), la paroi (7) s'appuyant contre le boîtier de commande (10) ou étant fixée à celui-ci et un déplacement de la paroi (7) étant au moins temporairement accouplé à un déplacement d'au moins un élément d'actionnement (2, 3, 4), et le ressort d'appareil étant disposé de manière serrée entre le boîtier de servofrein (6) et le boîtier de commande (10), **caractérisé en ce que** le ressort d'appareil (11) est réalisé sous la forme d'un ressort de rappel pour le rappel du boîtier de commande (10), après une opération de freinage, dans la direction de sa position de départ non actionnée, une fonction de détection étant en outre associée au ressort d'appareil (11), par le fait que le ressort d'appareil (11) est un constituant du dispositif de contrôle de la position et du déplacement d'au moins un élément d'actionnement (2, 3, 4), une mesure de compression du ressort d'appareil (11) pouvant être détectée, et **en ce que** le ressort d'appareil (11) est disposé de manière électriquement isolée entre les deux butées.

2. Appareil de freinage (1) selon la revendication 1, **caractérisé en ce que** le ressort d'appareil (11) est réalisé de manière à être alimenté au moins temporairement par un courant électrique.

3. Appareil de freinage (1) selon la revendication 1, **caractérisé en ce que** le ressort d'appareil (11) est réalisé sous la forme d'un ressort de compression à boudin avec au moins un enroulement (W) .

4. Appareil de freinage (1) selon la revendication 3, **caractérisé en ce que** le ressort d'appareil (11), lors de la compression, présente au moins une zone de contact (12) à l'intérieur d'au moins un enroulement (W), la zone de contact (12) disposant d'une isolation électrique (13).

5. Appareil de freinage (1) selon la revendication 3, **caractérisé en ce qu'**au moins un premier enroulement (W) du ressort d'appareil (11) présente une isolation électrique (13).

6. Appareil de freinage (1) selon la revendication 4 ou 5, **caractérisé en ce que** l'isolation électrique (13) est réalisée sous la forme d'une gaine en matière plastique.

7. Appareil de freinage (1) selon la revendication 4 ou 5, **caractérisé en ce que** l'isolation électrique (13) est réalisée sous la forme d'un revêtement de vernis.

8. Appareil de freinage (1) selon les revendications 4 ou 5, **caractérisé en ce que** l'isolation électrique est réalisée sous la forme d'un insert en matière plastique (14).

9. Appareil de freinage (1) selon la revendication 1, **caractérisé en ce que** le ressort d'appareil (11) dispose d'au moins 2 extrémités de ressort (15, 16) et l'appareil de freinage (1) présente au moins 2 lignes électriques (17, 18), au moins une ligne (17) présentant une connexion électriquement conductrice (30) avec une extrémité de ressort (16) et au moins une ligne supplémentaire (18) présentant une connexion électriquement conductrice (30) avec au moins une autre extrémité de ressort (15).

10. Appareil de freinage (1) selon la revendication 9, **caractérisé en ce qu'**au moins une connexion électriquement conductrice (30) présente un élément d'accouplement (19) pour la connexion de la ligne (16, 17) au ressort d'appareil (11).

11. Appareil de freinage (1) selon au moins l'une quelconque des revendications 4 à 8 et 10, **caractérisé en ce que** l'élément d'accouplement (19) présente des moyens de bornes électriquement conducteurs (20) destinés à pénétrer à travers l'isolation électrique (13).

12. Appareil de freinage (1) selon la revendication 1, **caractérisé en ce qu'**entre le ressort d'appareil (11) et le boîtier de servofrein (6) est disposée au moins une plaque d'adaptateur électriquement isolante (21).

13. Appareil de freinage (1) selon la revendication 12, **caractérisé en ce qu'une** unité d'analyse électronique (22) est disposée sur la plaque d'adaptateur (21).

14. Appareil de freinage (1) selon les revendications 1 et 9, **caractérisé en ce qu'**au moins une extrémité de ressort (15, 16) du ressort d'appareil (11) est réalisée de manière prolongée tangentiellement.

15. Appareil de freinage (1) selon les revendications 3 et 9, **caractérisé en ce qu'**au moins une extrémité de ressort (15, 16) du ressort d'appareil (11) est réalisée sous forme coudée.

16. Appareil de freinage (1) selon la revendication 12, **caractérisé en ce que** la plaque d'adaptateur (21) dispose d'au moins un moyen de fixation (23, 38) pour fixer le ressort d'appareil (11).

17. Appareil de freinage (1) selon la revendication 9, **caractérisé en ce que** le boîtier de commande (10) présente au moins un engagement par correspondance géométrique (24) avec une extrémité de ressort (16) du ressort d'appareil (11).

18. Appareil de freinage (1) selon la revendication 1, **caractérisé en ce que** le servofrein (5) présente une interface électrique (25) séparable mécaniquement pour la transmission de signaux électriques vers et depuis le ressort d'appareil (11) .

19. Appareil de freinage (1) selon la revendication 18, **caractérisé en ce que** l'interface électrique (25) comprend une unité d'analyse électrique (22).

20. Appareil de freinage (1) selon la revendication 18, **caractérisé en ce que** l'interface électrique (25) est disposée au niveau du boîtier de servofrein (6).

21. Appareil de freinage (1) selon la revendication 18, **caractérisé en ce que** l'interface électrique (25) est associée à un raccord à vide (26) ou est intégrée dans celui-ci.

Fig. 1

EP 2 828 133 B1

Fig.2

Fig.3

Fig.4

Fig.5

**Fig. 6**

a) b)

**Fig. 7**

a)

b)

c)

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10351933 A1

- DE 102006040877 A1